# EUROPÄISCHE PATENTANMELDUNG

(11) **EP 1 956 117 A1**
(43) Veröffentlichungstag der Anmeldung: **13.08.2008**
(21) Anmeldenummer: 08002371.6
(22) Anmeldetag: 08.02.2008
(51) Int. Cl.: C25D 3/48, C25D 3/62, A61C 13/08, C25D 5/02

(54) **Galvanische Abscheidung von Gold oder Goldlegierungen**

(30) Priorität: 12.02.2007 DE 102007008183
(71) Anmelder: Wieland Dental + Technik GmbH & Co. KG, 75179 Pforzheim (DE)
(72) Erfinder: Neye, Helmut, 75305 Neuenbürg (DE)
(74) Vertreter: Patentanwälte Ruff, Wilhelm, Beier, Dauster & Partner

(57) **Zusammenfassung**

Bei einem Verfahren zur galvanischen Abscheidung von Gold oder Goldlegierungen aus einem Elektrolyten erfolgt die Abscheidung aus einem Elektrolyten hoher Viskosität. Dieses Verfahren ist insbesondere zur nachträglichen Galvanisierung von Sekundärkronen bzw. Außenteleskopen von sogenannten Teleskop-Prothesen geeignet, wobei der Elektrolyt vorzugsweise ausschließlich in das von der Innenfläche der Sekundärkrone begrenzte Volumen eingebracht ist.

Die Erfindung umfaßt auch den Elektrolyten selbst, der zur Bereitstellung einer hohen Viskosität mindestens ein Verdickungsmittel, insbesondere mindestens ein organisches Verdickungsmittel, enthält.

## Beschreibung

Die Erfindung betrifft ein Verfahren zur galvanischen Abscheidung von Gold oder Goldlegierungen aus einem galvanischen Bad bzw. Elektrolyten sowie einen entsprechenden Elektrolyten. Dabei ist das Verfahren insbesondere zur galvanischen Abscheidung von Gold oder Goldlegierungen an Sekundärkronen bzw. Außenteleskopen von sogenannten Teleskop-Prothesen vorgesehen.

Die galvanische Abscheidung von Metallen und Edelmetallen aus Elektrolyten, den sogenannten galvanischen Bädern, ist bereits seit langem bekannt. In diesem Zusammenhang hat auch die galvanische Abscheidung von Gold oder Goldlegierungen eine große Bedeutung erlangt, beispielsweise in der Elektronik bei der Abscheidung von Leiterbahnen und elektrischen Kontakten.

In den vergangenen Jahrzehnten hat die galvanische Abscheidung, insbesondere von Gold oder Goldlegierungen, auch in die Dentaltechnik Eingang gefunden. Dabei wurden zunächst cyanidische Elektrolyte, bei denen das Gold in Form eines Cyanidkomplexes vorliegt, verwendet. Diese Goldbäder wurden dann später zunehmend durch sulfitische Bäder ersetzt, bei denen das Gold aus einem Sulfitkomplex im Elektrolyten abgeschieden wird. Die physikalisch-chemischen Eigenschaften der abgeschiedenen Schichten werden durch die Zugabe von Additiven, wie beispielsweise Glanzmitteln, Härtern und dergleichen, beeinflußt.

Auch bei den derzeit ausgereiften und kommerziell verwendeten Elektrolyten besteht ein stetiger Bedarf nach Verbesserungen. Dies betrifft zum einen die Eigenschaften des Elektrolyten selbst, z. B. seine Handhabbarkeit, Ausarbeitbarkeit und dergleichen. Zum anderen werden an die abgeschiedenen Schichten unterschiedliche Anforderungen gestellt, die durch die derzeit existierenden Elektrolyten nicht immer erfüllt werden können.

In besonderer Weise stellt sich die genannte Problematik bei der galvanischen Abscheidung von Gold oder Goldlegierungen an den Komponenten von sogenannten Teleskop-Prothesen. Bei einer solchen Teleskop-Prothese handelt es sich um einen herausnehmbaren Zahnersatz, der größere Lücken in Zahnreihen ersetzen kann. Dabei wird auf noch vorhandene beschliffene Zahnstümpfe oder auf in den Kiefer eingebrachte Implantate eine sogenannte Stumpfkappe dauerhaft befestigt, in der Regel aufzementiert. Diese Kappen, die auch als Innenteleskope oder Primärkronen bezeichnet werden, bilden die Pfeiler der Prothese. Auf diese Innenteleskope bzw. Primärkronen werden dann entsprechend passende zweite Kappen aufgesetzt, die sogenannten Außenteleskope oder Sekundärkronen, die mit dem eigentlichen, abnehmbaren Zahnersatz fest verbunden sind. Beim Einsetzen der Prothese werden die Außenteleskope vom Patienten über die Innenteleskope gesetzt, wobei eine stabile Verbindung zwischen den Außenteleskopen und den Innenteleskopen durch die sogenannte Friktion (adhäsive Haftung) gewährleistet ist.
Durch das häufige Abnehmen und Aufsetzen der Außenteleskope auf die Innenteleskope wird durch Reibung Material abgetragen. Dies beeinträchtigt allmählich die Passung zwischen Innenteleskopen und Außenteleskopen. Bei Verwendung von Bauteilen aus Gold oder Goldlegierungen ist es deshalb üblich, die Innenfläche der frei zugänglichen Außenteleskope/Sekundärkronen galvanisch "nachzuvergolden". Verwendet man für diese Nachvergoldung übliche Verfahren und Elektrolyten, so hat dies eine ganze Reihe von Nachteilen:
- Der gesamte abnehmbare Zahnersatz muß an denjenigen Stellen, die selbstverständlich nicht galvanisiert werden dürfen, abgedeckt werden. Diese Abdeckung muß nach dem Galvanisiervorgang wieder entfernt werden.
- Der verwendete Elektrolyt muß eine starke Strömungsbewegung aufweisen, um zu gewährleisten, daß immer genug Elektrolyt an die Innenfläche der kappenartigen Sekundärkronen, insbesondere an den vergleichsweise engen Bereich der Spitze dieser Sekundärkrone, gelangt. Auf diese Weise wird versucht, an der engen Spitze der Sekundärkrone die gleiche Schichtdicke aufzubringen wie an den Rändern der Innenfläche. Eine gleichmäßige Schichtdicke über die gesamte Innenfläche der Sekundärkrone ist zwingende Voraussetzung für eine gute Passung zwischen Sekundärkrone und zugehöriger Primärkrone.
- Der Galvanisiervorgang muß, insbesondere aus den oben genannten Gründen, mehrmals, in der Regel mindestens drei Mal wiederholt werden, um die für die Nachvergoldung notwendige Schichtdicke zu erreichen. Dies stellt einen erheblichen Zeitaufwand für den Zahntechniker dar.

Dementsprechend stellt sich die Erfindung die Aufgabe, die erwähnten Nachteile, insbesondere bei der Abscheidung von Gold oder Goldlegierungen an Sekundärkronen bzw. Außenteleskopen von sogenannten Teleskop-Prothesen zu verbessern. Durch die Bereitstellung eines neuen Verfahrens und eines neuen Elektrolyten soll erreicht werden, daß die galvanische Abscheidung schneller und unkomplizierter erfolgen kann. Dabei soll eine gleichmäßige Schichtstärke über die gesamte zu beschichtende Fläche des Dentalteils erreicht werden.

Diese Aufgabe wird gelöst durch das Verfahren mit den Merkmalen des Anspruchs 1. Bevorzugte Ausführungen dieses Verfahrens sind in den abhängigen Ansprüchen 2 bis 16 dargestellt. Darüber hinaus umfaßt die Erfindung den Elektrolyten mit den Merkmalen des Anspruchs 17. Bevorzugte Ausgestaltungen dieses Elektrolyten sind in den abhängigen Ansprüchen 18 bis 28 beschrieben. Der Wortlaut sämtlicher Ansprüche wird hiermit durch Bezugnahme zum Inhalt dieser Beschreibung gemacht.

Das erfindungsgemäße Verfahren zeichnet sich dadurch aus, daß bei der galvanischen Abscheidung von Gold oder Goldlegierungen aus einem galvanischen Bad bzw. Elektrolyten aus einem Elektrolyt hoher Viskosität abgeschieden wird. Dieses Verfahren ist insbesondere zur Abscheidung von Gold oder Goldlegierungen an Sekundärkronen bzw. Außenteleskopen von sogenannten Teleskop-Prothesen geeignet. Dabei ist der genannte Elektrolyt vorzugsweise (ausschließlich) in das von der Innenfläche der Sekundärkrone begrenzte Volumen der Sekundärkrone eingebracht.

Durch die beschriebenen Maßnahmen wird insbesondere das oben beschriebene bisherige Verfahren zur nachträglichen Abscheidung von Gold oder Goldlegierungen auf die Innenfläche von Sekundärkronen in verblüffendem Maße vereinfacht. Aufgrund der Tatsache, daß aus einem Elektrolyt hoher Viskosität abgeschieden wird, kann der Elektrolyt definiert nur in das Volumen, das von der Innenfläche der Sekundärkrone begrenzt wird, d. h. in den "Innenraum" der Sekundärkrone eingebracht werden. Damit entfällt automatisch die beim Stand der Technik notwendige Abdeckung der Bereiche der Prothese, die nicht galvanisiert werden sollen und dürfen. Aufgrund der Tatsache, daß der hoch viskose Elektrolyt mit der gesamten Innenfläche der Sekundärkrone in Kontakt steht, ist eine gleichmäßige Abscheidung über die gesamte Innenfläche möglich.

In Weiterbildung des erfindungsgemäßen Verfahrens enthält der Elektrolyt mindestens ein sogenanntes Verdickungsmittel, insbesondere ein organisches Verdickungsmittel. Unter Verdickungsmittel oder Dickungsmittel sollen alle Stoffe verstanden werden, die geeignet sind, einem Elektrolyten mehr Viskosität zu verleihen bzw. diesen Elektrolyten in ausreichendem Maße zu verfestigen. Solche Verdickungsmittel könnten im weiteren Sinne auch als Bindemittel bezeichnet werden. Auch sogenannte Flockungshilfsmittel können erfindungsgemäß eingesetzt werden. Hier ist eine begriffliche Abgrenzung häufig schwierig.

Bei den Verdickungsmitteln ist grundsätzlich auch an den Einsatz von anorganischen Stoffen, wie beispielsweise Kieselsäuren, Tonmineralien oder Zeolithe zu denken. Wie bereits erwähnt, ist jedoch der Einsatz organischer Verdickungsmittel bevorzugt. Hier können beispielsweise organische, vollsynthetische Verdickungsmittel wie Polyacryl- und Polymetacryl-Verbindungen, Polyether, Polyamide und dergleichen Verwendung finden. Besonders bevorzugt sind Polymerisate auf Acrylsäurebasis als Verdickungsmittel, wobei es sich hier vorzugsweise um ein Acrylamid-Acrylsäue-Copolymerisat handelt. Diese sind auch als Flockungshilfsmittel bekannt.

Unter den organischen Verdickungsmitteln sind jedoch auch natürlich vorkommende Stoffe oder abgewandelte Naturstoffe bevorzugt. Bei den abgewandelten Naturstoffen kann es sich beispielsweise um Carboxymethylcellulose, Hydroxyethylcellulose oder Hydroxypropylzellulose handeln. Bei den natürlich vorkommenden Stoffen ist an die Verwendung von Agar, Alginsäure, Gummi arabicum, Pektin, Gelatine, Casein und dergleichen zu denken, wie sie auch in der Lebensmittelindustrie eingesetzt werden.
Erfindungsgemäß besonders bevorzugt ist die Verwendung von Stärke oder modifizierter Stärke als Verdickungsmittel.
Detaillierte Ausführungen zur Definition von Stärke erübrigen sich, da diese dem Fachmann, auch als Verdickungsmittel, in hinreichendem Maße bekannt ist. Stärke kommt natürlich als pflanzlicher Speicherstoff vor und kann aus verschiedenen Pflanzen, wie Weizen, Kartoffeln, Reis und Mais gewonnen werden.
Sogenannte modifizierte Stärke kann durch Umsetzung mit Chemikalien (chemisch modifizierte Stärken) oder durch Anwendung beispielsweise von Hitze oder Druck (physikalisch modifizierte Stärken) erhalten werden. Durch Einsatz von Enzymen erhält man enzymatisch modifizierte Stärken.

Das Verdickungsmittel ist bei der Erfindung im Elektrolyt vorzugsweise in einer Menge von mindestens 3 g/l, insbesondere von mindestens 5 g/I, enthalten. Besonders bevorzugt ist ein Gehalt von mindestens 10 g Verdickungsmittel/l Elektrolyt. Auf diese Weise können die entsprechenden hohen Viskositäten des Elektrolyten bereitgestellt werden.

Innerhalb der genannten bevorzugten Bereiche ist es weiter bevorzugt, wenn das Verdickungsmittel im Elektrolyt in einer Menge zwischen 10 bis 50 g/l enthalten ist. Insbesondere beträgt der Gehalt des Verdickungsmittels im Elektrolyt ca. 20 g/l.

Die Viskosität des Elektrolyten, der im erfindungsgemäßen Verfahren eingesetzt wird, beträgt vorzugsweise mindestens 500 mPa-s, wobei eine Viskosität von mindestens 1.000 mPa·s weiter bevorzugt ist. Dies sind wesentlich höhere Werte, als sie die bisherigen Elektrolyten aufweisen, die bei der galvanischen Abscheidung von Gold oder Goldlegierungen in der Dentaltechnik Verwendung finden.
Die Definition der Viskosität und ihre Messung ist dem Fachmann aus dem Stand der Technik bekannt. Mit Viskositäten von mindestens 500 mPa·s, insbesondere mindestens 1.000 mPa·s, liegen die erfindungsgemäß eingesetzten Elektrolyten mit ihren Werten mindestens bei der Viskosität von Honig oder Sirup, um einen Vergleich zu aus dem Alltag bekannten Lebensmitteln zu wählen. Übliche Elektrolyten zur galvanischen Abscheidung in der Dentaltechnik sind wesentlich niedrigviskoser.

Bei dem erfindungsgemäßen Verfahren kann das Gold, das aus dem Elektrolyten abgeschieden wird, grundsätzlich in beliebiger Weise im Elektrolyten enthalten sein. So ist beispielsweise ein Einsatz der in der Dentaltechnik üblichen Elektrolyten möglich, bei denen das Gold als Goldcyanidkomplex im Bad enthalten ist. Derartige Komplexe sind dem Fachmann bekannt, beispielsweise in Form von Kaliumgoldcyanid-Komplexen. Erfindungsgemäß bevorzugt ist jedoch die Verwendung von Bädern, bei denen das Gold in Form eines Goldsulfit-Komplexes vorliegt. Diese entwickeln keine toxischen Gase, so daß in der Regel keine besonderen Vorsichtsmaßnahmen zu beachten sind.

In Weiterbildung ist es erfindungsgemäß bevorzugt, wenn der verwendete Elektrolyt einen hohen Goldgehalt besitzt, d. h. wenn es sich um einen sogenannten hochgoldhaltigen Elektrolyten handelt. Da es bei dem erfindungsgemäßen Verfahren möglich ist, nur mit derjenigen Elektrolytmenge auszukommen, die beispielsweise (einmalig) in das (innere) Volumen der Sekundärkrone eingebracht wird, bietet es sich an, solche hochgoldhaltigen Elektrolyte zu verwenden, um entweder die gewünschte Schichtdicke schnell oder um höhere Schichtdicken zu erhalten.

Dementsprechend beträgt der Goldgehalt im Elektrolyt vorzugsweise mindestens 30 g Gold/l, insbesondere mindestens 50 g Gold/l. Dabei ist es weiter bevorzugt, wenn der Elektrolyt einen Goldgehalt zwischen 50 und 120 g Gold/I, insbesondere einen Goldgehalt zwischen 50 und 100 g Gold/I, aufweist.

Bei weiteren bevorzugten Ausführungen enthält der verwendete Elektrolyt vorzugsweise eine Säure, die zum einen den pH-Wert des Elektrolyten beeinflußt und zum anderen ein verwendetes Verdickungsmittel in gewünschter Weise modifizieren kann. Bei einer solchen Säure handelt es sich vorzugsweise um eine organische Säure, insbesondere um Zitronensäure.

An dieser Stelle sei ganz allgemein erwähnt, daß der pH-Wert des Elektrolyten bei dem erfindungsgemäßen Verfahren häufig zwischen 3,5 und 7, d. h. im (leicht) sauren Bereich liegt. Diese Werte beziehen sich insbesondere auf diejenigen Bäder, bei denen das Gold in Form eines Goldcyanid-Komplexes vorliegt. Bei sulfitischen Bädern können auch pH-Werte im leicht Basischen bevorzugt sein, beispielsweise bis zu 8,5 oder 9. Bei allen Elektrolyten können zur pH-Wertstabilisierung Puffersubstanzen zugegeben sein.

Die Schichtdicken der Gold- oder Goldlegierungsschichten, die bei dem erfindungsgemäßen Verfahren abgeschieden werden, betragen üblicherweise, insbesondere bei der nachträglichen galvanischen Beschichtung von Sekundärkronen, zwischen 5 µm und 100 µm. Innerhalb dieses Bereiches sind Schichtdicken zwischen 10 µm und 50 µm weiter bevorzugt. Insbesondere betragen die Schichtdicken zwischen 25 µm und 50 µm.
Schließlich sei erwähnt, daß es bei dem erfindungsgemäßen Verfahren weiter bevorzugt ist, wenn die galvanische Abscheidung ohne Abdeckung der Bereiche des zu beschichtenden Teils, insbesondere des Dentalteils, durchgeführt wird, die nicht galvanisiert werden sollen oder dürfen.

Die Parameter der galvanischen Abscheidung selbst sind bei der Erfindung in Bezug auf Spannung und Stromstärke sowie Abscheidedauer nicht kritisch und können in Abhängigkeit von dem gewünschten Galvanisierergebnis frei gewählt werden. Bei einer nachträglichen Beschichtung der Innenfläche einer Sekundärkrone mit einer Schichtdicke zwischen 25 µm und 50 µm wird üblicherweise eine Spannung von unter 20 V, insbesondere unter 10 V, angelegt.

Neben dem beschriebenen erfindungsgemäßen Verfahren umfaßt die Erfindung auch den bereits im Zusammenhang mit dem Verfahren beschriebenen Elektrolyten selbst. Dieser ist dadurch gekennzeichnet, daß er mindestens ein Verdickungsmittel, insbesondere mindestens ein organisches Verdickungsmittel, enthält, das eine hohe Viskosität des Elektrolyten bereitstellt.

Bezüglich der verwendbaren Verdickungsmittel, der verwendeten Mengen dieser Verdickungsmittel und der daraus resultierenden bevorzugten Viskositätswerte des Elektrolyten kann ausdrücklich auf die vorherigen Ausführungen zum erfindungsgemäßen Verfahren Bezug genommen und verwiesen werden.

Der neue erfindungsgemäße Elektrolyt eröffnet der galvanischen Abscheidung, insbesondere auf dem Gebiet der Dentaltechnik, ganz neue Einsatzmöglichkeiten und verbessert bereits bestehende Einsatzmöglichkeiten. Dies zeigt sich insbesondere auch bei der bereits erläuterten nachträglichen Aufbringung von Gold- oder Goldlegierungsschichten auf die Innenflächen von Sekundärkronen bei Teleskop-Prothesen. Dort wird durch die neue Verfahrensführung und durch den neuen Elektrolyten eine kürzere Galvanisierzeit mit verbesserten Ergebnissen realisiert, was im Zusammenhang mit den Beispielen noch näher erläutert wird.

Der erfindungsgemäße Elektrolyt ist vorzugsweise hochgoldhaltig mit Goldgehalten von mindestens 30 g Gold/l, insbesondere von mindestens 50 g Gold/l. Auf die dabei bevorzugten Bereiche des Goldgehalts wurde im Zusammenhang mit dem erfindungsgemäßen Verfahren bereits eingegangen. Dies gilt auch für den möglichen bevorzugten Zusatz einer Säure.

Wie ebenfalls bereits erwähnt, handelt es sich bei dem Elektrolyten beispielsweise um einen cyanidischen goldhaltigen Elektrolyten, d. h. das Gold ist im Elektrolyten in Form eines Goldcyanid-Komplexes enthalten. Bevorzugt ist der Elektrolyt aber ein solcher, bei dem das Gold im Elektrolyten in Form eines Goldsulfit-Komplexes enthalten ist.

Der pH-Wert cyanidischer goldhaltiger Elektrolyte liegt bei der Erfindung vorzugsweise zwischen 3,5 und 7. Werden Elektrolyte mit einem Goldsulfit-Komplex verwendet, können pH-Werte im leicht alkalischen Bereich, d. h. zwischen 7 und 9, bevorzugt sein. In allen Elektrolyten können zur pH-Wertstabilisierung vorzugsweise Puffersubstanzen enthalten sein.

Erfindungsgemäß nicht kritisch ist der Zusatz von Legierungsmetallen zum Elektrolyten, um nicht reines Gold, sondern Goldlegierungen abzuscheiden. Die entsprechenden üblichen Legierungsmetalle sind dem Fachmann bekannt. Insbesondere auch zur Komplexierung dieser Legierungsmetalle können dem Elektrolyten übliche Komplexbildner zugesetzt sein, die dem Fachmann ebenfalls bekannt sind, beispielsweise EDTA, NTA und dergleichen.
Außerdem enthält der erfindungsgemäße Elektrolyt in der Regel übliche Badzusätze bzw. Additive, die die physikalischen und chemischen Eigenschaften der abgeschiedenen Schichten bzw. die sogenannte Badführung verbessern. Bei der ersteren Gruppe handelt es sich insbesondere um sogenannte Härter oder Glanzmittel/Glanzzusätze.

Die beschriebenen Merkmale und weitere Merkmale der Erfindung ergeben sich aus dem nachfolgenden Beispiel in Verbindung mit den Unteransprüchen. Dabei können die einzelnen Merkmale jeweils für sich allein oder zu mehreren in Kombination miteinander verwirklicht sein.

### Beispiel 1

Der abnehmbare Zahnersatz einer Teleskop-Prothese mit mehreren Sekundärkronen wird von den Primärkronen/Innenteleskopen abgenommen, um die Innenflächen der Sekundärkronen, die aufgrund Abnutzung keine ausreichende Passung mehr zeigen, nachzuvergolden.

Zu diesem Zweck wird ein erfindungsgemäßer Elektrolyt der folgenden Zusammensetzung verwendet:

| | | |
|---|---|---|
| 1. | NaH₂PO₄ | 5 g/I |
| 2. | H₃BO₂ | 5 g/I |
| 3. | Komplexbildner (EDTA) | 2,5 g/I |
| 4. | CoSO₄ | 1,5 g/I |
| 5. | KCN | 1,5 g/I |
| 6. | Kaliumgoldcyanid 67 % | 149,25 g/I (entspricht 100 g Gold/l) |
| 7. | Härtezusatz | 20 mg/I Ag + 20 mg/I In |
| 8. | Stärke | 20 g/I |
| 9. | Zitronensäure | 0,1 g/l |
| | pH-Wert | 3,8 |

Bei den Substanzen 1. und 2. handelt es sich um Puffersubstanzen.
Der Komplexbildner 3. ist EDTA (Ethylendiamintetraessigsäure). Substanz 4. ist ein Zusatz, der die Härte der erhaltenen Schicht positiv beeinflußt.
Die Substanzen 5. und 6. bilden den Cyanidkomplex, aus dem das Gold abgeschieden wird. Die verwendete Menge an Substanz 6. entspricht 100 g Gold/I.
Der beschriebene Elektrolyt wird in das innere Volumen der Sekundärkronen eingebracht, wobei die Sekundärkronen so angeordnet sind, daß die Öffnung dieses Volumens nach oben zeigt. Der Elektrolyt wird nur (!) in dieses Volumen eingebracht, wobei Mengen zwischen 0,5 und 1 ml Elektrolyt pro Sekundärkrone ausreichen. Eine Abdeckung der übrigen Teile des abnehmbaren Zahnersatzes ist nicht erforderlich.

Anschließend wird jeweils eine Elektrode als Anode direkt in das Innere der Sekundärkrone, das mit dem Elektrolyt befüllt ist, eingebracht. Dann werden die Sekundärkronen an ihren Außenflächen jeweils als Kathode kontaktiert und durch Stromfluß zwischen Kathoden und Anoden eine Goldschicht auf den Innenflächen der Sekundärkronen abgeschieden. Mit der beschriebenen Vorgehensweise können mehrere Sekundärkronen gleichzeitig galvanisiert werden. Die Schichtdicke der abgeschiedenen Schichten ist abhängig von der Galvanisierdauer und der Stromstärke/Spannung, so daß eine individuell bestimmbare Schichtdicke bereitgestellt werden kann. Wie bereits in der Beschreibung erläutert, werden üblicherweise Schichten mit Dicken zwischen 10 µm und 50 µm, vorzugsweise zwischen 25 µm und 50 µm, aufgebracht.

Nach Durchführung des (einmaligen!) Galvanisiervorgangs ist die Nachvergoldung abgeschlossen. Es müssen keine Abdeckschichten vom Zahnersatz entfernt werden, und es ist auch keine weitere Nachvergoldung in weiteren Galvanisierschritten erforderlich, um die notwendige Schichtdicke zu erreichen.

### Beispiel 2

Bei diesem Beispiel wird in gleicher Weise vorgegangen, wie dies in Beispiel 1 beschrieben ist. Es wird lediglich ein Elektrolyt auf Basis eines Goldsulfidkomplexes verwendet, der die folgende Zusammensetzung besitzt:

| | |
|---|---|
| Ammoniumhydrogenphosphat | 50 g/l |
| Ammoniumsulfat | 70 g/I |
| Ammoniumsulfit | 85 g/l |
| Triethanolamin | 0,5 g/I |
| 3-Nitrobenzolsulfonsäure | 0,5 g/I |
| Cu rein (Kupferlösung) | 7 mg/I |
| Goldsulfitlösung | 50-70 g/I |
| Acrylamid-Acrylsäure-Copolymerisat anodisch | 5 g/I |
| (Verdickungsmittel; Magnafloc von Ciba) | |
| pH-Wert | 8,5. |

Hierbei werden ebenfalls die in Beispiel 1 beschriebenen Goldschichten erhalten.

## Patentansprüche

1. Verfahren zur galvanischen Abscheidung von Gold oder Goldlegierungen aus einem galvanischen Bad bzw. Elektrolyten, insbesondere zur galvanischen Abscheidung von Gold oder Goldlegierungen an Sekundärkronen bzw. Außenteleskopen von sogenannten Teleskop-Prothesen, bei dem das Gold oder die Goldlegierung aus einem Elektrolyten hoher Viskosität abgeschieden wird und wobei vorzugsweise der Elektrolyt in das von der Innenfläche der Sekundärkrone begrenzte Volumen der Sekundärkrone eingebracht ist.

2. Verfahren nach Anspruch 1, **dadurch gekennzeichnet, daß** der Elektrolyt mindestens ein Verdickungsmittel, insbesondere ein organisches Verdickungsmittel, enthält.

3. Verfahren nach Anspruch 2, **dadurch gekennzeichnet, daß** es sich bei dem Verdickungsmittel um ein Polymerisat auf Acrylsäurebasis, insbesondere um ein Acrlyamid-Acrylsäure-Copolymerisat handelt.

4. Verfahren nach Anspruch 2, **dadurch gekennzeichnet, daß** es sich bei dem Verdickungsmittel um einen natürlich vorkommenden Stoff oder um einen abgewandelten Naturstoff handelt.

5. Verfahren nach Anspruch 3, **dadurch gekennzeichnet, daß** es sich bei dem Verdickungsmittel um Stärke oder um modifizierte Stärke handelt.

6. Verfahren nach einem der Ansprüche 2 bis 5, **dadurch gekennzeichnet, daß** das Verdickungsmittel im Elektrolyt in einer Menge von ≥ 3 g/l, insbesondere in einer Menge von ≥ 5 g/l, vorzugsweise ≥ 10 g/l, enthalten ist.

7. Verfahren nach Anspruch 6, **dadurch gekennzeichnet, daß** das Verdickungsmittel im Elektrolyt in einer Menge zwischen 10 bis 50 g/l, insbesondere in einer Menge von ca. 20 g/I, enthalten ist.

8. Verfahren nach einem der Ansprüche, **dadurch gekennzeichnet, daß** die Viskosität des Elektrolyten ≥ 500 mPa·s, vorzugsweise ≥ 1.000 mPa·s, beträgt.

9. Verfahren nach einem der vorhergehenden Ansprüche, **dadurch gekennzeichnet, daß** es sich bei dem Elektrolyten um einen cyanidischen goldhaltigen Elektrolyten handelt.

10. Verfahren nach einem der vorhergehenden Ansprüche, **dadurch gekennzeichnet, daß** es sich bei dem Elektrolyten um einen Elektrolyten auf Goldsulfit-Basis handelt.

11. Verfahren nach einem der vorhergehenden Ansprüche, **dadurch gekennzeichnet, daß** der Elektrolyt einen Goldgehalt ≥ 30 g Gold/I, insbesondere einen Goldgehalt > 50 g/) Gold, aufweist.

12. Verfahren nach Anspruch 11, **dadurch gekennzeichnet, daß** der Elektrolyt einen Goldgehalt zwischen 40 und 120 g Gold/I, insbesondere einen Goldgehalt zwischen 50 und 100 g Gold/I, aufweist.

13. Verfahren nach einem der vorhergehenden Ansprüche, **dadurch gekennzeichnet, daß** der Elektrolyt mindestens eine Säure, vorzugsweise eine organische Säure, insbesondere Zitronensäure, enthält.

14. Verfahren nach einem der vorhergehenden Ansprüche, **dadurch gekennzeichnet, daß** eine Gold- oder Goldlegierungsschicht mit einer Schichtdicke zwischen 5 µm und 100 µm, vorzugsweise zwischen 10 µm und 50 µm, abgeschieden wird.

15. Verfahren nach Anspruch 14, **dadurch gekennzeichnet, daß** eine Schicht mit einer Schichtdicke zwischen 25 µm und 50 µm abgeschieden wird.

16. Verfahren nach einem der vorhergehenden Ansprüche, **dadurch gekennzeichnet, daß** die Abscheidung ohne Abdeckung nicht zu galvanisierender Bereiche durchgeführt wird.

17. Elektrolyt zur galvanischen Abscheidung von Gold oder Goldlegierungen, **dadurch gekennzeichnet, daß** er mindestens ein Verdickungsmittel, insbesondere mindestens ein organisches Verdickungsmittel, zur Bereitstellung einer hohen Viskosität des Elektrolyten enthält.

18. Elektrolyt nach Anspruch 17, **dadurch gekennzeichnet, daß** es sich bei dem Verdickungsmittel um ein Polymerisat auf Acrylsäurebasis, insbesondere um ein Acrylamid-Acrylsäure-Copolymerisat handelt.

19. Elektrolyt nach Anspruch 17, **dadurch gekennzeichnet, daß** es sich bei dem Verdickungsmittel um einen natürlich vorkommenden Stoff oder um einen abgewandelten Naturstoff handelt.

20. Elektrolyt nach Anspruch 19, **dadurch gekennzeichnet, daß** es sich bei dem Verdickungsmittel um Stärke oder um modifizierte Stärke handelt.

21. Elektrolyt nach einem der Ansprüche 17 bis 20, **dadurch gekennzeichnet, daß** die Viskosität des Elektrolyten ≥ 500 mPa·s, vorzugsweise ≥ 1.000 mPa·s, beträgt.

22. Elektrolyt nach einem der Ansprüche 17 bis 21, **dadurch gekennzeichnet, daß** das Verdickungsmittel im Elektrolyt in einer Menge von > 3 g/l, insbesondere in einer Menge von ≥ 5 g/l, vorzugsweise ≥ 10 g/l, enthalten ist.

23. Elektrolyt nach Anspruch 22, **dadurch gekennzeichnet, daß** das Verdickungsmittel im Elektrolyt in einer Menge zwischen 10 bis 50 g/l, insbesondere in einer Menge von ca. 20 g/l, enthalten ist.

24. Elektrolyt nach einem der Ansprüche 17 bis 23, **dadurch gekennzeichnet, daß** der Elektrolyt einen Goldgehalt ≥ 30 g Gold/l, insbesondere einen Goldgehalt ≥ 50 g Gold/l, aufweist.

25. Elektrolyt nach einem der Ansprüche 17 bis 24, **dadurch gekennzeichnet, daß** der Elektrolyt einen Goldgehalt zwischen 40 und 120 g Gold/l, insbesondere einen Goldgehalt zwischen 50 und 100 g Gold/I, aufweist.

26. Elektrolyt nach einem der Ansprüche 17 bis 25, **dadurch gekennzeichnet, daß** der Elektrolyt mindestens eine Säure, vorzugsweise eine organische Säure, insbesondere Zitronensäure, enthält.

27. Elektrolyt nach einem der Ansprüche 17 bis 26, **dadurch gekennzeichnet, daß** das Gold im Elektrolyten in Form eines Goldcyanid-komplexes enthalten ist.

28. Elektrolyt nach einem der Ansprüche 17 bis 26, **dadurch gekennzeichnet, daß** das Gold im Elektrolyten in Form eines Goldsulfit-komplexes enthalten ist.
